# EUROPÄISCHE PATENTSCHRIFT

(11) **EP 0 414 051 B1**
(45) Veröffentlichungstag und Bekanntmachung des Hinweises auf die Patenterteilung: **18.10.1995**
(21) Anmeldenummer: 90115251.2
(22) Anmeldetag: 08.08.1990
(51) Int. Cl.: H04M 1/00, H04M 3/42, G06F 3/023, G05B 19/10

(54) **Schaltungsanordnung für tastengesteuerte Schalteinrichtungen in Fernmeldeanlagen, insbesondere Fernsprechvermittlungsanlagen**
Circuit arrangement for key-controlled switching devices in communication exchanges, especially telephone exchanges
Montage pour dispositifs de commutation commandés par touches dans des centraux de communication, en particulier centraux téléphoniques

(30) Priorität: 25.08.1989 DE 3928220
(43) Veröffentlichungstag der Anmeldung: 27.02.1991
(73) Patentinhaber: SIEMENS AKTIENGESELLSCHAFT, 80333 München (DE)
(72) Erfinder: Kulzer, Ernst, Dipl.-Ing., D-8023 Pullach (DE)

(56) Entgegenhaltungen:
- EP-A- 0 254 156
- DE-A- 3 722 857

## Beschreibung

Die Erfindung betrifft eine Schaltungsanordnung für in Fernmeldeanlagen, insbesondere Fernsprechvermittlungsanlagen, eingesetzte tastengesteuerte Schalteinrichtungen, bei denen den Funktionstasten einer Eingabetastatur einzelne Betriebs funktionen zugeordnet sind, auf die eine Schalteinrichtung wahlweise einstellbar ist, und die sich teilweise gegenseitig ausschließen.

Schaltungsanordnungen dieser Art in Fernmeldeanlagen sind u.a. Ladegleichrichter. Sie können auf verschiedene Betriebsweisen eingestellt werden. Die verschiedenen Betriebs funktionen können im manuellen Betrieb, selbstregelnden Betrieb, in Ladung, Schnell-Ladung, Erhaltungs-Ladung, Siebung der Ausgangsspannung und dergleichen bestehen. Ferner können Ladegleichrichter umschaltbar sein auf verschiedene Ausgangsspannungen von z.B. 48 Volt, 60 Volt, 120 Volt und dergleichen. Sei Ladegleichrichtern können die verschiedenen Funktionen solche sein, die sich gegenseitig ausschließen, aber ebenso auch solche, die sich gegenseitig nicht ausschließen. Zum Beispiel mögen die Betriebsweisen "manueller Betrieb" und "selbstregelnder Betrieb" Funktionen sein, die sich gegenseitig ausschließen. Ebenso mögen die Betriebsweisen "Ladung", "Schnell-Ladung" und "Erhaltungs-Ladung" Funktionen sein, die sich gegenseitig ausschließen. Dagegen mögen die beiden erstgenannten Betriebsweisen "manueller Betrieb" und "selbstregelnder Betrieb" funktionsmäßig vereinbar sein mit den letztgenannten drei Betriebsweisen "Ladung", "Schnell-Ladung" und "Erhaltungs-Ladung". - Darüber hinaus können Ladegleichrichter auf unterschiedliche Ausgangsspannungen einstellbar sein. Die Betriebsweisen mit den verschiedenen Ausgangsspannungen sind ebenfalls Funktionen, die untereinander sich ausschließen, jedoch sind diese Funktionen durchaus vereinbar, z.B. mit den die verschiedenen Arten von Ladung betreffenden Funktionen, sowie mit manuellem Betrieb beziehungsweise selbstregelndem Betrieb. - Es können sich diese Funktionen jedoch auch teilweise miteinander vereinbaren lassen und können demgegenüber auch teilweise sich gegenseitig ausschließen. Es ist z.B. denkbar, daß Ladung sowie Erhaltungs-Ladung möglich ist bei Ausgangsspannungen von 48 Volt, von 60 Volt und von 120 Volt, daß aber Schnell-Ladung nur möglich ist bei 48 Volt und bei 60 Volt Ausgangsspannung, jedoch nicht bei einer Ausgangsspannung von 120 Volt. Darüber hinaus kann es sein, daß z.B. die Funktionsweise "Siebung der Ausgangsspannung" nur möglich ist im Zusammenhang mit der Funktionsweise "Erhaltungs-Ladung, nicht aber im Zusammenhang mit der Funktionsweise "Ladung" oder "Schnell-Ladung".

Ähnliche technische Zusammenhänge kann es auch geben bei einer Anwendung der eingangs genannten Schaltungsanordnung in anderen Zusammenhängen, z.B. bei einer Steuerung von Fahrzeugen oder von Aufzügen. Im letzteren Falle kann es z.B. gehen um die Funktionen "Tür öffnen", "Tür schließen", "Fahrt", "Aufwärts", "Abwärts", "Schnell-Fahrt", "Schon-Fahrt in langsamer Geschwindigkeit", "Licht" "Ventilator", "Heizung", "Kühlung", "Frischluft", "Notruf" und dergleichen mehr. Auch in diesem Falle kann es Funktionen geben, die sich gegenseitig ausschließen. So schließen sich z.B. die Funktionen "Aufwärts-Fahrt" und "Abwärts-Fahrt" gegenseitig aus. Und zwar schließen sich diese Funktionen gegenseitig logisch aus. Ebenso kann es auch Funktionen oder Betriebsweisen geben, die sich nach den gegebenen Betriebsvorschriften gegenseitig ausschließen. So muß z.B. unterbunden werden, daß die Funktion "Tür öffnen" jede der Fahrt-Funktionen ausschließt und umgekehrt.

In Schaltungsanordnungen der eingangs angegebenen Art werden in bekannten Fällen Tastaturen verwendet, bei denen bestimmte Tasten sich gegenseitig mechanisch verriegeln. Wird also eine Taste einer solchen Tastatur gedrückt, so kann eine andere, z.B. benachbarte, Taste nicht mehr gedrückt werden und umgekehrt. Tastaturen mit einer derartigen gegenseitigen Verriegelung sind jedoch relativ aufwendig, dies gilt in besonderer Weise unter dem Aspekt, daß es bestimmte Funktionen sein müssen, die sich gegenseitig ausschließen und andere Funktionen, die sich gegenseitig nicht ausschließen.

Für die Erfindung besteht deshalb die Aufgabe, eine Schaltungsanordnung der eingangs angegebenen Art so auszubilden, daß mit einfacheren Mitteln bewerkstelligt wird, daß Funktionen, die nicht gleichzeitig gegeben sein dürfen, sich gegenseitig verhindern. Darüber hinaus soll aber erreicht werden, daß bei einer irrtümlichen Betätigung von Funktionstasten für Funktionen, die sich gegenseitig ausschließen, keine Blockierung der Funktionen eintritt. Es soll aber auch eine unerwünschte Falschbedienung vermieden werden, und es sollen hierzu geeigente technische Vorkehrungen getroffen sein.

Die Erfindung löst die ihr gestellte Aufgabe dadurch, daß Eingabestromkreise von den Funktionstasten zu einer Auswertelogikschaltung geführt sind, die bei Eingabe einer Kombination von logisch und/oder gemäß Betriebsvorschrift sich gegenseitig ausschließenden Funktionen diese Kombination in eine solche Alternativkombination von sich gegenseitig nicht ausschließenden Funktionen umwandelt, welche gegenüber der über die Eingabetastatur ursprünglich eingegebenen Kombination die geringste Anzahl von Veränderungen von Funktionen aufweist, die demgegenüber ergänzt, unterdrückt und/oder ausgewechselt werden, und daß an einer Anzeigeeinrichtung die Funktionen gemäß Alternativkombination zur Anzeige gebracht werden.

Mit Hilfe der Erfindung wird erreicht, daß bei einer Falschbetätigung von Funktionstasten für Funktionen, die miteinander logisch oder gemäß den Betriebsvorschriften nicht vereinbar sind, der Betriebsablauf nicht gestört ist, wobei jedoch der die Eingabetastatur Bedienende unterrichtet wird über die jeweilige Alternativkombination von zur Zeit wirksamen Funktionen.

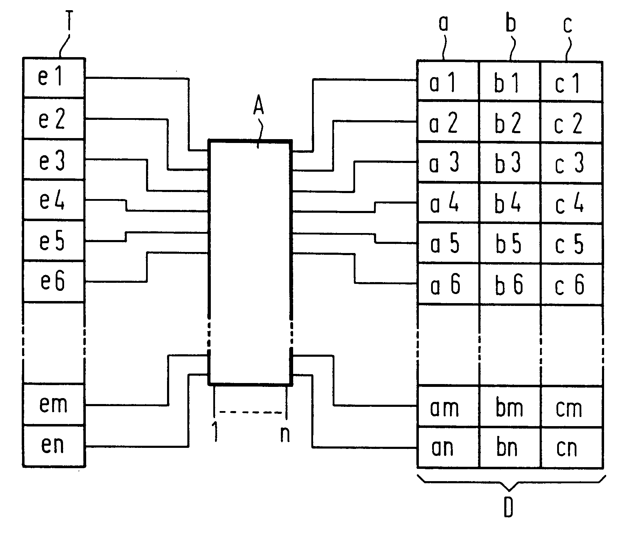

In der Zeichnung ist ein Ausführungsbeispiel der Erfindung nur in wesentlich zu ihrem Verständnis beitragenden Bestandteilen dargestellt.

Eine Eingabe-Tastatur umfaßt Funktionstasten el bis en. Ihnen sind einzeln Betriebsfunktionen zugeordnet, auf die eine Schalteinrichtung, zu der diese Eingabe-Tastatur gehört, wahlweise einstellbar ist. Diese Einstellung der Schalteinrichtung erfolgt über Stromkreise 1 bis n. Bei der genannten Schalteinrichtung kann es sich um Ladegleichrichter in Fernsprechvermittlungsanlagen handeln. Solche Ladegleichrichter dienen zur Aufladung von Speisebatterien. Bei der genannten Schalteinrichtung kann es sich aber auch um jede andere Art von Schalteinrichtungen handeln, die auf verschiedene Funktionen und/oder Betriebszustände einstellbar sind. Weiter oben wurde bereits das Beispiel einer Aufzugseinrichtung erwähnt. Ebenso kann es sich bei einer solchen Schalteinrichtung auch um eine Fernsprechvermittlungsanlage handeln, die auf verschiedene Betriebszustände und/oder Funktionsweisen und/oder Facilities einstellbar ist. Diese können zusammenfassend auch als " Betriebsfunktionen" (siehe oben) bezeichnet werden. - Im hier gegebenen Zusammenhang ist es nun wesentlich, daß diese Betriebsfunktionen sich teilweise gegenseitig ausschließen. Dies kann rein logisch bedingt sein. So kann zum Beispiel ein Aufzug entweder nur aufwärts fahren oder nur abwärts fahren. Beides zugleich ist schlechthin nicht möglich. Ein Aufzug könnte aber mit geöffneter Tür fahren. Dies aber ist aus Gründen bestehender Betriebsvorschriften nicht zulässig. Demgemäß schließen sich die Funktionsweise "Fahrt" (aufwärts oder abwärts) einerseits und "Tür öffnen" gegenseitig aus, weil dies gemäß den bestehenden Betriebsvorschriften aus Sicherheitsgründen verboten ist.

Bei einem Ladegleichricher könen die Betriebsfunktionen manueller Betrieb und selbstregelnder Betrieb sein. Im ersteren Falle kann z.B. die Ladestromstärke von Hand eingestellt werden, während im letzteren Falle eine entsprechende Selbstregelungsfunktion zum Tragen kommt. Diese beiden Betriebsweisen mögen einander ausschließen. Weitere Betriebsfunktionen können Ladung, Schnell-Ladung und Erhaltungs-Ladung sein. Bei Ladung erfolgt eine Batterie-Aufladung mit mittlerer Intensität. Bei Schnell-Ladung erfolgt eine Batterieladung mit besonders hoher Intensität. Bei Erhaltungs-Ladung erfolgt eine Batterieladung nur nach Maßgabe des durchschnittlichen Stromverbrauches mit der Wirkung, daß eine bereits geladene Speisebatterie ihren Ladungs-Zustand nicht verliert. Diese drei Ladungs-Betriebsfunktionen schließen sich auch gegenseitig aus. Eine weitere Betriebsfunktion bei Ladegleichrichtern kann z.B. eine Siebung (Glättung) der Ausgangsspannung sein. Dabei kann vorgesehen sein, daß z.B. die Betriebsfunktion Schnell-Ladung und Siebung einander ausschließen, nicht dagegen Ladung oder Erhaltungs-Ladung einerseits und Siebung andererseits. Weitere Betriebsfunktionen können darin bestehen, daß ein Ladegleichrichter eine Ausgangsspannung von 48 Volt liefert oder eine Ausgangsspannung von 60 Volt oder eine Ausgangsspannung von 120 Volt. Auch diese drei Betriebs funktionen schließen sich untereinander aus. Es kann nun auch wieder sein, daß die Betriebsfunktionen Schnell-Ladung und Lieferung von 120 Volt Ausgangsspannung einander ausschließen, daß aber die übrigen Ladungs-Betriebsfunktionen einerseits und die drei verschiedenen Ausgangsspannungen andererseits einander nicht gegenseitig ausschließen.

Handelt es sich bei der betreffenden Schalteinrichtung um eine Fernsprechvermittlungsanlage, so können die verschiedenen Betriebsfunktionen Nachtschaltung, Rufweiterschaltung, automatischer Rückruf, Rückfragemöglichkeit, Umlegemöglichkeit, Amtsberechtigung, Halbamtsberechtigung und dergleichen sein. Es kann nun auch in diesem Falle vorgesehen sein, daß ein Teil dieser Betriebsfunktionen sich gemäß den bestehenden Betriebsvorschriften gegenseitig ausschließen. So kann es z.B. sein, daß Anrufweiterschaltung nur möglich sein soll, wenn die Betriebsfunktion Nachtschaltung wirksam geschaltet ist. Ferner kann vorgesehen sein, daß Amtsberechtigung und Umlegemöglichkeit einander ausschließen sollen. Es ließen sich nun unzählig viele Beispiele ähnlicher Art angeben.

Wie aus der Zeichnung ersichtlich ist, sind Eingabestromkreise von den Funktionstasten el bis en zu einer Auswertelogikschaltung A geführt. Es liegt völlig im Rahmen des fachmännischen Könnens, mit Hilfe von Relaisschaltungen, bzw.von entsprechenden elektronischen Gatterschaltungen, entsprechende Auswertelogikschaltungen aufzubauen, in denen die betreffenden logischen Zusammenhänge niedergelegt sind und die diese logischen Zusammenhänge dann praktisch zur Wirkung bringen. Ebensogut ist es auch möglich, eine solche Auswertelogikschaltung mit Hilfe eines Mikrocomputers zu verwirklichen, der nach Maßgabe der gegenseitig sich ausschließenden Funktionen in geeigneter Weise programmiert ist, bzw. hierfür einen bereits für andere Zwecke, z.B. Steuerungszwecke, vorhandenen mitauszunutzen.

Die in der Zeichnung dargestellte Auswertelogikschaltung A ist nun so aufgebaut, daß sie bei Eingabe einer Kombination von sich gegenseitig ausschließenden Funktionen diese Kombination in eine solche Alternativkombination von sich gegenseitig nicht ausschließenden Funktionen umwandelt, welche gegenüber der über die Eingabetastatur T ursprünglich eingegebenen Kombination von Betriebsfunktionen die geringste Anzahl von Veränderungen dieser Funktionen aufweist. Die ursprüngliche Kombination von mittels Tastatur T eingegebenen Betriebsfunktionen möge über über die Funktionstasten e1 bis e5 eingegeben sein. Es sei angenommen, daß eine solche Kombination Betriebsfunktionen entspricht, die sich in dieser Kombination gegenseitig ausschließen. Es sei weiterhin angenommen, daß eine Alternativkombination, die aus den den Funktionstasten e2 bis e5 entsprechenden Betriebsfunktionen besteht, keine sich gegenseitig ausschließenden Funktionen enthält. Es sei außerdem angenommen, daß auch eine Alternativkombination aus den Betriebsfunktionen, denen die Funktionstasten e1 und e3 entsprechen, keine sich gegenseitig ausschließenden Funktionen enthält. Ferner sei angenommen, daß auch noch eine Alternativkombination von Betriebsfunktionen, denen die Funktionstasten e1, e4 und e5 entsprechen, ebenfalls keine sich gegenseitig ausschließenden Funktionen enthält. In dem hier gegebenen Beispiel, wonach die Funktionstasten e1 bis e5 betätigt werden, wird nun diejenige Alternativkombination ausgewählt, die gegenüber der über die Eingabetastatur E ursprünglich eingegebenen Kombination (e1 bis e5) die geringste Anzahl von Veränderungen von Funktionen aufweist (e2 bis e5). Demgemäß unterdrückt die Auswertelogikschaltung A diejenige Betriebsfunktion, der die Funktionstaste e1 zugeordnet ist. Es wird also nur diese Betriebsfunktion unterdrückt.

In ähnlicher Weise kann es gemäß einem anderen Funktionsbeispiel auch sein, daß die Kombination von Betriebsfunktionen, denen die Funktionstasten e1 bis e3 entsprechen, sich gegenseitig ausschließen, daß aber bei einem Hinzukommen derjenigen Betriebsfunktion, der die Funktionstaste e6 zugeordnet ist, eine Alternativkombination vorliegt, innerhalb der sich die Betriebsfunktionen nicht gegenseitig ausschließen. In diesem Falle wählt die Auswertelogikschaltung A gegenüber der über die Eingabetastatur ursprünglich eingegebenen Kombination (e1 bis e3) eine Alternativkombination (e1 bis e3 und e6) die gegenüber der ursprünglich eingegebenen Kombination die geringste Anzahl von Veränderung von Veränderungen von Funktionen aufweist. Eine andere Alternativkombination könnte z.B. eine solche sein, die die Betriebsfunktionen umfaßt, denen die Funktionstasten e1 bis e3, e5 und em entsprechen. Diejenige Alternativkombination, die in dem zuletzt beschriebenen Funktionsbeispiel die geringste Anzahl von Veränderungen von Funktionen aufweist, ist aber die Alternativkombination, die aus Betriebsfunktionen besteht, denen die Funktionstasten e1 bis e3 und e6 entspricht. Deshalb wird diese Alternativkombination ausgewählt.

Ebenso, wie Funktionen unterdrückt oder ergänzt werden, können sie auch ausgewechselt werden. Wird z.B. eine Kombination von Betriebsfunktionen gewählt, denen die Funktionstasten e1 bis e4 entsprechen, und enthält diese Kombination Funktionen, die sich in dieser Zusammenstellung gegenseitig ausschließen, so könnte z.B. eine Alternativkombination darin bestehen, daß von der Auswertelogikschaltung A diejenigen Betriebsfunktionen ausgewählt werden, denen die Funktionstasten e1 bis e3 und e5 entsprechen. Auch in diesem Falle handelt es sich dann um eine Alternativkombination von sich gegenseitig nicht mehr ausschießenden Funktionen, welche also gegenüber der über die Eingabetastatur ursprünglich eingegebenen Kombination die geringste Anzahl von Veränderungen von Funktionen aufweist, die hierbei ausgewechselt werden. Darüber hinaus besteht die Möglichkeit, bei gleicher Anzahl von Veränderungen einem Unterdrücken den Vorrang zu geben gegenüber einem Ergänzen von Betriebsfunktionen (oder umgekehrt), oder auch ein Unterdrücken bzw. Ergänzen von Betriebsfunktionen zu bevorzugen gegenüber einem Auswechseln von Betriebsfunktionen.

In der Zeichnung ist außerdem eine Anzeigeeinrichtung D dargestellt. Diese Anzeigeeinrichtung kann am einfachsten in der Weise aufgebaut werden, daß sie nur ein Feld von Anzeigeeinrichtungen a1 bis an aufweist. In diesem Falle würde jeweils eine Funktionstaste (e1 bis en) einer Betriebsfunktion je eines der Anzeigefelder a1 bis an entsprechen. Dabei entspricht jeweils einer Betriebsfunktion sowohl je eine Funktionstaste (z.B. e1) als auch je ein Anzeigefeld (z.B. a1). Die Anzeigefelder können Anzeigelampen, hinterseitig beleuchtete Schriftfelder oder LED-Anzeigeeinrichtungen sein. Es wird also an einer Anzeigeeinrichtung zur Anzeige gebracht, welche Funktionen gemäß jeweiliger Alternativkombination ausgewählt worden sind. Dadurch kann der Bediener der Eingabetastatur erkennen, welche Kombination von Betriebsfunktionen tatsächlich zur Einstellung gebracht worden ist nach entsprechender Betätigung der Eingabetastatur.

In der Anzeigeeinrichtung D sind noch zwei weitere (senkrecht dargestellte) Reihen von Anzeigefeldern b1 bis bn und c1 bis cn vorgesehen. Hierdurch ist es möglich, daß von den Funktionen gemäß einer Alternativkombination diejenigen, die von Veränderungen betroffen sind, durch eine sich gesondert erkennbare Anzeigeart angezeigt werden. Mit Hilfe der Anzeigefelder in der Reihe a werden diejenigen Funktionen angezeigt, die tatsächlich vom Betreiber über die Eingabetastatur T gewählt worden sind. Über die Reihe b von Anzeigefeldern mögen bei Auswahl einer Alternativkombination jeweils diejenigen Betriebs funktionen angezeigt werden, die gemäß dieser Alternativkombination jeweils ergänzt worden sind durch die Auswertelogikschaltung A. Über die Reihe c von Anzeigefeldern mögen diejenigen Betriebsfunktionen zur Anzeige gebracht werden, die bei Wahl einer Alternativkombiantion durch die Auswertgelogikschaltung A gemäß dieser Alternativkombination unterdrückt worden sind. In entsprechender Weise kann auch eine Anzeige erfolgen, wenn es sich bei der jeweiligen Veränderung um eine Auswechselung einer Betriebsfunktion durch eine andere Betriebsfunktion handelt. Auch in diesem Falle werden diejenigen Betriebsfunktionen, die von Veränderungen betroffen sind, durch eine sich gesondert erkennbare Anzeigeart angezeigt. - Die besondere Anzeigeart ist also unterschiedlich für die Veränderungsformen Ergänzung, Unterdrückung und gegebenenfalls Auswechselung.

Für die gesonderte Anzeigeart pro Betriebsfunkton kann anstelle eines gesonderten Anzeigemittels (Anzeigefeld in einer anderen Reihe von Anzeigefeldern) oder zusätzlich zu diesem auch eine gesonderte Anzeige-Darstellungsweise vorgesehen werden, z.B. ein Flackerzeichen anstelle von einem Dauerzeichen. Auch hierdurch wird der Benutzer einer entsprechenden Schalteinrichtung aufmerksam gemacht, wenn mittels der Auswertelogikschaltung eine Alternativkombination anstelle der ursprünglich gewählten Kombination von Betriebsfunktionen durch die Auswertelogikschaltung A ausgewählt wird.

## Patentansprüche

1. Schaltungsanordnung für in Fernmeldeanlagen, insbesondere Fernsprechvermittlungsanlagen, eingesetzte tastengesteuerte Schalteinrichtungen, bei denen den Funktionstasten einer Eingabetastatur einzeln Betriebs funktionen zugeordnet sind, auf die eine Schalteinrichtung wahlweise einstellbar ist und die sich teilweise gegenseitig ausschließen,
**dadurch gekennzeichnet,**
daß Eingabestromkreise von den Funktionstasten zu einer Auswertelogikschaltung geführt sind, die bei Eingabe einer Kombination von logisch und/oder gemäß Betriebsvorschrift sich gegenseitig ausschließenden Funktionen diese Kombination in eine solche Alternativkombination von sich gegenseitig nicht ausschließenden Funktionen umwandelt, welche gegenüber der über die Eingabetastatur ursprünglich eingegebenen Kombination die geringste Anzahl von Veränderungen von Funktionen aufweist, die demgegenüber ergänzt, unterdrückt und/oder ausgewechselt werden, und daß an einer Anzeigeeinrichtung die Funktionen gemäß Alternativkombination zur Anzeige gebracht werden.

2. Schaltungsanordnung nach Anspruch 1,
**dadurch gekennzeichnet,**
daß von den Funktionen gemäß Alternativkombination diejenigen, die von Veränderungen betroffen sind, durch eine sich gesondert erkennbare Anzeigeart angezeigt werden.

3. Schaltungsanordnung nach Anspruch 2,
**dadurch gekennzeichnet,**
daß die besondere Anzeigeart unterschiedlich ist für die Veränderungsformenergänzung, Unterdrückung und gegebenenfalls Auswechselung.

4. Schaltungsanordnung nach Anspruch 2,
**dadurch gekennzeichnet,**
daß für die gesonderte Anzeigeart pro Funktion ein gesondertes Anzeigemittel, z.B. eine gesonderte Anzeigelampe pro Funktion, und/oder eine gesonderte Anzeige-Darstellungsweise, z.B. Flackerzeichen anstelle von Dauerzeichen, vorgesehen ist.

## Claims

1. Circuit arrangement for key-controlled switching devices employed in telecommunication exchanges, preferably telephone exchanges, in which operating functions are assigned individually to the function keys of an input keyboard, it being possible to set a switching device to said functions as desired, the latter being mutually exclusive in some cases, characterized in that input electric circuits are led from the function keys to an evaluation logic circuit which, when a combination of functions that are mutually exclusive logically and/or according to operating regulations is entered, converts said combination into an alternative combination of functions that are not mutually exclusive which has the lowest number of function changes in comparison with the combination originally entered via the input keyboard, said functions being extended, suppressed and/or substituted in comparison therewith, and in that the functions are indicated on an indication means in accordance with the alternative combination.

2. Circuit arrangement according to Claim 1, characterized in that, of the functions in accordance with the alternative combination, those affected by changes are indicated by a separately identifiable mode of indication.

3. Circuit arrangement according to Claim 2, characterized in that the particular mode of indication is different for the extension, suppression and, if appropriate, substitution types of change.

4. Circuit arrangement according to Claim 2, characterized in that, for the separate mode of indication for each function, a separate indication means, for example a separate indication lamp for each function, and/or a separate manner of indication, for example flashing signals instead of continuous signals, is provided.

## Revendications

1. Montage pour des dispositifs de commutation commandés de façon cadencée, utilisés dans des installations de télécommunication, notamment des installations de commutation téléphonique, et dans lesquels aux touches fonctionnelles d'un clavier d'entrée sont associées individuellement des fonctions de service, sur lesquelles un dispositif de commutation peut être réglé au choix et qui s'excluent en partie mutuellement, caractérisé par le fait que les circuits d'entrée s'étendent depuis les touches fonctionnelles jusqu'à un circuit logique d'évaluation, qui, lors de l'entrée d'une combinaison de fonctions s'excluant mutuellement du point de vue logique et/ou conformément à une prescription de service, convertit cette combinaison entre une combinaison alternative de fonctions ne s'excluant pas mutuellement, qui possède, par rapport à la combinaison introduite initialement au moyen du clavier d'entrée, le nombre le plus faible de modifications de fonctions, qui sont au contraire complétées, supprimées et/ou remplacées, et que les fonctions conformément à une liaison alternative sont affichées dans un dispositif d'affichage.

2. Montage suivant la revendication 1, caractérisé par le fait que celles des fonctions correspondant à la combinaison alternative, qui sont concernées par des modifications, sont affichées au moyen d'un type d'affichage identifiable de façon particulière.

3. Montage suivant la revendication 2, caractérisé par le fait que le type particulier d'affichage est différent pour la complémentation, la suppression et éventuellement le remplacement de formes de modifications.

4. Montage suivant la revendication 2, caractérisé par le fait que pour le type particulier d'affichage, pour chaque fonction il est prévu un moyen d'affichage particulier, par exemple une lampe témoin particulière pour chaque fonction, et/ou un mode de représentation d'affichage particulier, par exemple des signaux clignotants à la place de signaux continus.
